# EUROPÄISCHE PATENTSCHRIFT

(11) **EP 3 269 835 B1**
(45) Veröffentlichungstag und Bekanntmachung des Hinweises auf die Patenterteilung: **08.08.2018**
(21) Anmeldenummer: 17177780.8
(22) Anmeldetag: 13.05.2015
(51) Int. Cl.: C22C 9/04, C22F 1/08, F16C 33/06

(54) **SONDERMESSINGLEGIERUNG UND LEGIERUNGSPRODUKT**
SPECIAL BRASS ALLOY AND ALLOY PRODUCT
ALLIAGE DE LAITON SPÉCIAL ET PRODUIT D'ALLIAGE

(30) Priorität: 16.05.2014 DE 102014106933
(43) Veröffentlichungstag der Anmeldung: 17.01.2018
(62) Teilanmeldung aus: 15725263.6
(73) Patentinhaber: Otto Fuchs - Kommanditgesellschaft -, 58540 Meinerzhagen (DE)
(72) Erfinder: Reetz, Björn, 47800 Krefeld (DE); Gummert, Hermann, 41751 Viersen (DE); Plett, Thomas, 57392 Schmallenberg (DE)
(74) Vertreter: Haverkamp, Jens

(56) Entgegenhaltungen:
- CN-A- 102 251 142
- CN-A- 103 602 998
- JP-A- 2001 355 029
- WEBER K ET AL: "Neuer Pb-freier Kupferwerkstoff fuer Gleitlageranwendungen in Verbrennungsmotoren und Getrieben", METALL : FACHZEITSCHRIFT FÜR METALLURGIE ; TECHNIK, WISSENSCHAFT, WIRTSC, GDMB-VERAG, CLAUSTHAL-ZELLERFELD, DE, Bd. 63, Nr. 11, 1. November 2009 (2009-11-01), Seiten 564-567, XP009157102, ISSN: 0026-0746
- KURBATKIN I I ET AL: "Effect of composition on the structure and properties of complex brasses used in the automotive industry", CVETNYE METALLY (TSVETNYE META, MOSKVA : GOS. OB'EDINNOE NAUÃ NO-TECHNIÃ ESKOE IZDAT, Nr. 3, 1. Januar 1994 (1994-01-01), Seiten 44-46, XP009186304, ISSN: 0372-2929

## Beschreibung

Die Erfindung betrifft eine Sondermessinglegierung und ein Produkt aus einer Sondermessinglegierung, das einer Reibbelastung unterliegt.

Für typische Reibanwendungen in einer Schmiermittelumgebung werden generell niedrige Reibwerte der verwendeten Legierung gefordert, wobei zusätzlich der Reibwert in vorgegebenen Grenzen an die jeweilige Anwendung, insbesondere den Reibpartner, den verwendeten Schmierstoff und die Reibbedingungen, wie Anpressdruck und Relativgeschwindigkeit, anpassbar sein sollte. Dies gilt insbesondere für Kolbenbuchsen, auf die hohe statische und dynamische Lasten wirken. Des Weiteren fordern Anwendungen mit hohen Relativgeschwindigkeiten der Reibpartner, wie sie beispielsweise für Axiallager eines Turboladers vorliegen, Legierungen, die neben einer reduzierten Wärmeentwicklung auch eine gute Wärmeableitung von der Reibfläche sicherstellen.

Durch die Reibleistung und den Ölkontakt entsteht auf der Lagerfläche eine tribologische Schicht mit angelagerten Schmiermittelkomponenten. Dabei wird eine gleichmäßige und zugleich hohe Anlagerungsrate der Schmiermittelbestandteile und deren Abbauprodukte gefordert, um an der Gleitschicht eine hinreichend stabile Adsorptionsschicht zu erhalten.

Ferner zeichnet sich ein geeigneter Lagerwerkstoff zusätzlich durch eine breitbandige Ölverträglichkeit aus, sodass der Aufbau der tribologischen Schicht weitgehend unempfindlich gegen die Wahl bestimmter Öladditive ist. Eine weitere Zielsetzung besteht darin, eine Legierung für Reibanwendungen mit guten Notlaufeigenschaften anzugeben, sodass eine hinreichende Standzeit unter Trockenreibungsbedingungen sichergestellt werden kann.

Für reibbelastete Bauteile ist zusätzlich wichtig, dass die eingesetzte Legierung eine hinreichende Festigkeit aufweist. Entsprechend sollte eine hohe 0,2 %-Dehngrenze vorliegen, um die unter Last auftretenden plastischen Verformungen möglichst gering zu halten. Zusätzlich wird gefordert, eine besonders harte und zugfeste Legierung anzugeben, um deren Widerstand gegen abrasive und adhäsive Belastungen zu erhöhen. Zugleich wird eine ausreichende Zähigkeit als Schutz gegen stoßende Beanspruchungen verlangt. In diesem Zusammenhang wird gefordert, die Anzahl der Mikrodefekte zu verringern und das von diesen ausgehende Defektwachstum zu verlangsamen. Dies geht einher mit der Forderung, eine Legierung mit einer möglichst hohen Bruchzähigkeit anzugeben, die weitgehend frei von Eigenspannungen ist.

Geeignete Legierungen für reibbeanspruchte Bauteile sind vielfach Sondermessinge, die neben Kupfer und Zink als Hauptbestandteile eine Zulegierung wenigstens eines der Elemente Nickel, Eisen, Mangan, Aluminium, Silizium, Titan oder Chrom aufweisen. Dabei erfüllen insbesondere Siliziummessinge die voranstehend genannten Anforderungen, wobei CuZn31Si1 eine Standardlegierung für Reibanwendungen, etwa für Kolbenbuchsen, darstellt. Ferner ist bekannt, Zinnbronzen, die neben Zinn und Kupfer zusätzlich Nickel, Zink, Eisen und Mangan aufweisen, für Reibanwendung oder auch für den Bergbau einzusetzen.

Als Beispiel für eine Kupfer-Zink-Legierung, die sich für auf Gleitung beanspruchte Maschinenteile, wie Lager, Schneckenräder, Zahnräder, Gleitschuhe und dergleichen, eignet, wird auf CH 223 580 A verwiesen. Offenbart wird ein Kupfergehalt von 50 - 70 Gew.-% mit einer Zulegierung von 2 - 8 Gew.-% Aluminium, 0,05 - 3 % Silizium und 0,5 - 10 Gew.-% Mangan sowie Rest Zink. Zusätzlich kann die Legierung bis maximal 10 Gew.-% Blei sowie 0,1 - 5 Gew.-% eines oder mehrerer Elemente aus der Gruppe Eisen, Nickel und Kobalt aufweisen. Des Weiteren ist aus der EP 0 407 596 B1 eine Sondermessinglegierung bekannt, die neben Kupfer, Zink, Mangan, Aluminium und Silizium als optionale Legierungsbestandteile Eisen, Nickel und Kobalt aufweist. Zusätzlich wird ein Anteil von 0,03 - 1 Gew.-% Sauerstoff vorgesehen. Des Weiteren offenbart DE 15 58 467 A eine weitere Sondermessinglegierung, die für auf Gleitung und Reibung beanspruchte Gegenstände vorgesehen ist. Neben Kupfer und einem Zinkanteil, der bis 45 Gew.-% reichen darf, liegt eine Zulegierung von Mangan und Silizium sowie Tellur vor. Zusätzlich stellen Fe, Ni, Al und Be weitere optionale Legierungsbestandteile dar. Ferner beschreiben DE 15 58 817 B2 und DE 101 59 949 C1 Kupferlegierungen mit einer breitbandigen Zusammensetzung, die einen verschleißreduzierten Lagerwerkstoff bilden.

Um bestimmte Eigenschaften eines aus einer Sondermessinglegierung hergestellten Produktes zu erreichen, werden Legierungen mit unterschiedlichen Legierungselementen eingesetzt. Für derartige Bauteile ist es somit erforderlich, entsprechend unterschiedliche Produkte zu bevorraten und vor allem auch den Umgang mit diesen unterschiedlichsten Legierungen zu beherrschen.

JP 2001-355029 A offenbart einen Synchronring und somit ein Bauteil, das auf zeitlich variable Reib-Belastung ausgelegt ist. Hergestellt wird dieses Bauteil durch folgende Schritte: Gießen eines Rohlings, Warm-Strangpressen eines Rohres, Herausschneiden eines Ringes, Warm-Schmieden und anschließendes maschinelles Bearbeiten. Der Synchronring ist aus einer Sondermessinglegierung gefertigt, die 62,46% Cu, 30,8% Cn sowie 0,053% Cr, Rest Zn enthält.

Weber et al.: "Neuer Pb-freier Kupferwerkstoff für Gleitlageranwendungen in Verbrennungsmotoren und Getrieben", Metall: Fachzeitschrift für Metallurgie; Technik, Wissenschaft, Wirtschaft, GDMB-Verlag, Band 63, Nr. 11, Seiten 564-567 (1. November 2009) offenbart ein Gleitlager aus einer Sondermessinglegierung mit folgender Zusammensetzung: 58% Cu, 0,5% Pb, 1% Si, 2% Mn, 0,5% Ni, 0,5% Fe, 2% Al, Rest Zn.

Ausgehend von den beiden zuletzt genannten Dokumenten aus dem Stand der Technik liegt der Erfindung die Aufgabe zugrunde, eine zu diesen vorbekannten Legierungen alternative Legierung bereitzustellen, aus der Produkte hergestellt werden können, die sich durch eine hohe Festigkeit, einen verbesserten Verschleiß unter Reibbelastung sowie guten Notlaufeigenschaften bei Mangelschmierung auszeichnen.

Die vorstehende Aufgabe wird gelöst durch eine Sondermessinglegierung mit den Merkmalen des Anspruchs 1.

Diese Legierung verfügt über einen relativ hohen Zn-Gehalt. Dieses ist bemerkenswert, da der Cu-Gehalt mit 60 bis 62 Gew.-% eng gewählt ist. Um Legierungen mit den jeweils gewünschten unterschiedlichen Eigenschaften bereitzustellen, ist der Anteil des Cu-Äquivalentes relativ groß gewählt, typischerweise zwischen 45 und 65 Gew.-%. Somit erfolgt eine Einstellung der jeweiligen Legierung und damit der Eigenschaften des daraus hergestellten Produktes über eine Variation der am Cu-Äquivalent beteiligten Elemente. Diesbezüglich sind vor allem die Elemente Mn, Ni, Al und Si von Bedeutung. Durch eine Variation der Beteiligung dieser Elemente an der Sondermessinglegierung lassen sich beispielsweise der Anteil der α- und β-Phasen in der Matrix einstellen. So lassen sich Legierungen durch eine entsprechende Variation in diesen Elementen ausbilden, deren Produkte überwiegend eine α-Phase, überwiegend eine β-Phase oder eine Mischung aus beiden Phasen aufweisen. Ebenso lässt sich, ohne das Verarbeitungsverfahren ändern zu müssen, ein Sondermessinglegierungsprodukt mit unterschiedlicher Korngröße durch entsprechende Variationen vor allem dieser Elemente einstellen.

Neben den Hartphasen beeinflussen die Härte und die Zähigkeit der Legierung wesentlich die Eigenschaft der Reibschicht. Dabei zeichnet sich die erfindungsgemäße Legierung durch eine erstaunlich weite Spanne erzielbarer mechanischer Parameter aus, sodass Dehngrenze, Zugfestigkeit, Bruchdehnung, Härte und Zähigkeit verglichen mit bisher für Reibanwendungen eingesetzten Legierungen durch die Wahl der Verarbeitungsprozesse nach dem Legierungsguss in verbessertem Maß unabhängig voneinander einstellbar sind. Ein exakt für die Erfordernisse der Anwendung gewähltes Legierungsprodukt kann durch folgende Verarbeitungsprozesse nach dem Aufschmelzen der erfindungsgemäßen Bestandteile erzielt werden:
- Warmumformung direkt nach dem Legierungsguss, insbesondere Stranggießen, ohne einen weiteren Behandlungsschritt oder ausschließlich gefolgt durch einen abschließenden Glühschritt,
- Strangpressen mit einer direkt nachgeschalteten Kaltumformung gefolgt von einem abschließenden Glühschritt,
- Strangpressen mit nachfolgendem Zwischenglühen vor dem Ausführen einer Kaltumformung und einem abschließenden Glühschritt.

Der beobachtete hohe mechanische Verschleißwiderstand von aus dieser Legierung hergestellter Produkte ist auf das Vorliegen länglicher intermetallischer Phasen zurückzuführen, die eine gute Längsausrichtungsneigung in Strangpressrichtung zeigen. Die Lagerfläche des aus der Sondermessinglegierung gemäß der dritten Ausführung resultierenden Legierungsprodukts wird dann so ausgelegt, dass die Reibbelastungsrichtung im Wesentlichen parallel zur Längsausrichtung der intermetallischen Phasen verläuft. Die eher längliche Ausbildung der Silizide, vor allem der Mn-Silizide haben die Funktion, die Matrix gegenüber verschleißender Belastung zu schirmen.

Ferner zeichnet sich auch diese Legierung durch eine gute Einstellbarkeit des Verhältnisses zwischen der α-Phase und der β-Phase der Legierungsmatrix aus. Damit kann das Reibverschleißverhalten unmittelbar auf den Anwendungsfall angepasst werden.

Des Weiteren resultieren aus dem wählbaren Grundgefüge bezüglich der α-/β-Phasenanteile eine vergleichsweise hohe Dehngrenze und eine hohe erzielbare Festigkeit. Ferner hat sich eine erstaunlich breite Einstellbarkeit der mechanischen Eigenschaften des nach dem Verarbeitungsprozess resultierenden Legierungsprodukts gezeigt. Demnach ist eine vorteilhaft gute Anpassbarkeit an die Bedingungen der jeweils vorliegenden Reibanwendung gegeben.

Die sich einstellende Korngröße liegt zwischen 100 und 300 µm und ist verglichen mit den beiden vorbeschriebenen Spezial-Sondermessinglegierungen relativ grobkörnig. Dieses hingegen ist für eine zerspanende Bearbeitung ein aus dieser Legierung hergestellten Halbzeuges vorteilhaft.

Vorzugsweise wird man bei der vorbeschriebenen Sondermessinglegierung das Mn-Al-Verhältnis etwa zwischen 0,9 und 1,1 einstellen, vorzugsweise etwa bei 1.

Im Folgenden wird die Erfindung anhand eines bevorzugten Ausführungsbeispiels unter Bezugnahme auf die Figuren erläutert. Es zeigen:
- **Fig. 1:**: eine lichtmikroskopische Aufnahme des Strangpresszustands der erfindungsgemäßen Sondermessinglegierung im Querschliff mit 100-facher Vergrößerung,
- **Fig.2:**: den Strangpresszustand des erfindungsgemäßen Sondermessings aus Figur 1 als lichtmikroskopische Aufnahme mit 500-facher Vergrößerung,
- **Fig. 3:**: eine lichtmikroskopische Aufnahme des erfindungsgemäßen Sondermessings nach einem Weichglühen bei 450°C im Querschliff mit 50-facher Vergrößerung,
- **Fig. 4:**: eine lichtmikroskopische Aufnahme des Weichglühzustands des erfindungsgemäßen Sondermessings aus Figur 3 im Querschliff mit 500-facher Vergrößerung,

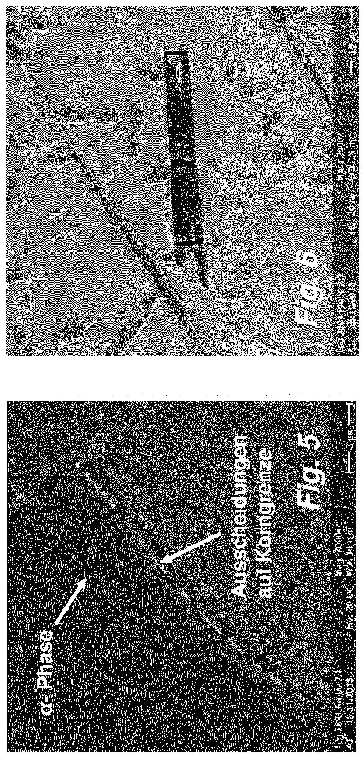

- **Fig. 5:**: eine rasterelektronenmikroskopische Aufnahme mit Sekundärelektronenkontrast des Strangpresszustands des erfindungsgemäßen Sondermessings bei 7000-facher Vergrößerung und
- **Fig. 6:**: eine rasterelektronenmikroskopische Aufnahme mit Sekundärelektronenkontrast des Legierungsendzustands des erfindungsgemäßen Sondermessings bei 2000-facher Vergrößerung.

Im Gusszustand der erfindungsgemäßen Sondermessinglegierung liegen intermetallische Phasen vor, die im Strandpresszustand als rundliche und längliche, im Korninnern vorliegende Hartphasen bestimmt wurden. Die Legierungsmatrix im Strangpresszustand wird durch eine β-Phase gebildet. Konkret weist diese Ausführungsform der Sondermessinglegierung dieser untersuchten Probe folgende Zusammensetzung auf (Angaben in Gew.-%):

| **Cu** | **Zn** | **Pb** | **Sn** | **Fe** | **Mn** | **Ni** | **Al** | **Si** | **As** | **Sb** | **P** | **Cr** |
|---|---|---|---|---|---|---|---|---|---|---|---|---|
| 61,0 | Rest | 0,05 | 0,005 | 0,05 | 2,3 | 0,4 | 3,0 | 0,6 | - | - | 0,02 | 0,013 |

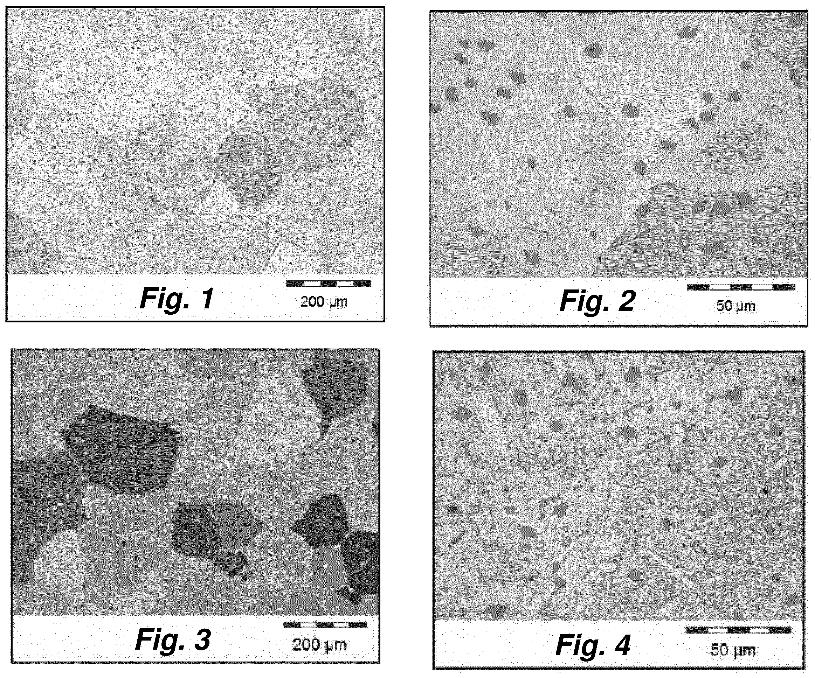

Aus im Einzelnen nicht dargestellten Längsschliffen ist ersichtlich, dass die Messingmatrix nur eine relativ schwache Ausrichtung in Strangpressrichtung aufweist (s. Figuren 1 und 2). Im Gegensatz hierzu ist eine deutliche Ausrichtung intermetallischen Phasen parallel zur Strangpressrichtung gegeben.

Die intermetallischen Phasen im Korninnern stellen sich einphasig dar, wobei eine mittlere Länge von ≤ 10 µm gemessen wurde. Aus EDX-Messungen konnte die chemische Zusammensetzung der intermetallischen Phasen ermittelt werden, wobei Mischsilizide und vor allem Mangansilizide in Form von Mn₅Si₃ und Mn₅Si₂ nachgewiesen wurden.

Ausgehend vom Strandpresszustand wird diese Sondermessinglegierung in einem nachfolgenden Prozessschritt durch ein Weichglühen behandelt, wobei der Weichglühzustand durch die in Figur 3 und Figur 4 gezeigten lichtmikroskopischen Aufnahmen von Querschliffen illustriert wird. Für eine Weichglühtemperatur von 450°C resultiert eine überwiegende β-Phase, wobei im Bereich der Korngrenzen und innerhalb der Körner α-Phasenanteile mit einer regellosen Verteilung vorliegen. Wird die Weichglühtemperatur auf 550°C erhöht, resultiert eine einheitliche β-Phase.

Auf das Weichglühen folgt eine Kaltumformung, wobei der Umformungsgrad typischerweise im Bereich von 5 - 15% Querschnittminderung gewählt wurde. Abschließend wird ein Endglühen ausgeführt, wobei für eine Glühtemperatur von 450°C ein weiterhin überwiegender β-Phasenanteil und ein gegenüber dem Weichglühzustand deutlich angestiegener α-Phasenanteile vorliegen. Im Vergleich hierzu tritt bei einer Endglühtemperatur von 550°C keine wesentliche Veränderung des Legierungsgefüges im Vergleich zum weichgeglühten Zustand ein.

Bezüglich der mechanischen Eigenschaften weist dieses Sondermessing im Strangpresszustand eine 0,2%-Dehngrenze von 480 - 550 MPa, eine Zugfestigkeit Rₘ von 720 - 770 MPa und eine Bruchdehnung von 9,3 - 29 % auf. Im Endzustand der Verarbeitung liegen eine 0,2%-Dehngrenze von 570 - 770 MPa, eine Zugfestigkeit Rₘ von 750 - 800 MPa und eine Bruchdehnung von 7,5 - 12 % vor.

## Patentansprüche

1. Sondermessinglegierung mit
60 - 62 Gew.-% Cu;
2,1 - 2,5 Gew.-% Mn;
0,2 - 0,6 Gew.-% Ni;
2,9 - 3,1 Gew.-% Al;
0,35 - 0,65 Gew.-% Si;
≤ 0,1 Gew.-% Fe;
≤ 0,1 Gew.-% Sn;
≤ 0,1 Gew.-% Pb;
und Rest Zn nebst unvermeidbaren Verunreinigungen enthält.

2. Sondermessinglegierungsprodukt mit einer Legierungszusammensetzung nach Anspruch 1, **dadurch gekennzeichnet, dass** das Sondermessinglegierungsprodukt durch Warmumformung, Glühen und Kaltziehen so eingestellt wird, dass die 0,2 %-Dehngrenze R_{P0,2} im Bereich von 570 - 770 MPa, die Zugfestigkeit Rₘ im Bereich von 750 - 800 MPa und die Bruchdehnung As im Bereich von 7,5 - 12 % liegen.

3. Sondermessinglegierungsprodukt nach Anspruch 2, **dadurch gekennzeichnet, dass** das Sondermessinglegierungsprodukt ein auf eine zeitlich variable Reibbelastung ausgelegtes Bauteil ist, insbesondere eine Lagerbuchse, ein Gleitschuh, ein Schneckenrad oder ein Axiallager für einen Turbolader.

## Claims

1. Special brass alloy with
60 - 62 % by weight Cu;
2.1 - 2.5 % by weight Mn;
0.2 - 0.6 % by weight Ni;
2.9 - 3.1 % by weight Al;
0.35 - 0.65 % by weight Si;
≤ 0.1 % by weight Fe;
≤ 0.1 % by weight Sn;
≤ 0.1 % by weight Pb;
and contains as the remainder Zn as well as unavoidable impurities.

2. Special brass alloy product with an alloy composition in accordance with claim 1, **characterised in that** the special brass alloy product is adjusted by hot forming, annealing, and cold drawing, in such a way that the 0.2% elongation limit R_{P0.2} lies in the range from 570-770 MPa, the tensile strength Rₘ in the range from 750-800 MPa, and the elongation after fracture A₅ in the range from 7.5-12 %.

3. Special brass alloy product according to claim 2, **characterised in that** the special brass alloy product is a component configured for a variable friction loading, in particular a bearing lining, a shoe, a worm wheel, or an axial bearing for a turbocharger.

## Revendications

1. Alliage de laiton spécial comportant
60 à 62 % de poids de Cu ;
2,1 à 2,5 % de poids de Mn ;
0,2 à 0,6 % de poids de Ni ;
2,9 à 3,1 % de poids d'Al ;
0,35 à 0,65 %de poids de Si ;
≤ 0,1 % de poids de Fe ;
≤ 0,1 % de poids de Sn ;
≤ 0,1 % de poids de Pb ;
et le reste de Zn auxquels s'ajoutent les inévitables impuretés.

2. Produit d'alliage de laiton spécial avec une composition d'alliage selon la revendication 1 **caractérisé en ce que** le produit d'alliage de laiton spécial est conçu au terme du formage à chaud, du recuit et de l'étirage à froid de telle sorte que la limite d'élasticité à 0,2 % R_{P0,2} est située dans une plage entre 570 et 770 MPa, la résistance à la traction Rₘ, dans une plage entre 750 et 800 MPa, et l'allongement à la rupture As, dans une plage entre 7,5 et 12 %.

3. Produit en alliage de laiton spécial selon la revendication 2, **caractérisé en ce que** le produit d'alliage de laiton spécial est une pièce conçue pour être soumise à une friction variable dans le temps, notamment un coussinet, un patin coulissant, une roue hélicoïdale ou un palier axial pour un turbocompresseur.
